Europäisches Patentamt

European Patent Office

Office européen des brevets

(11) Numéro de publication: **0 230 191**
A1

## (12) DEMANDE DE BREVET EUROPEEN

(21) Numéro de dépôt: **86402880.8**

(22) Date de dépôt: **19.12.86**

(51) Int. Cl.⁴: **B65D 85/34** , B65D 5/42

(30) Priorité: **20.12.85 FR 8519002**

(43) Date de publication de la demande:
**29.07.87 Bulletin  87/31**

(84) Etats contractants désignés:
**AT BE CH DE ES FR GB IT LI LU NL**

(71) Demandeur: **Société civile de Recherches des Produits du Soleil RE.PRO.SOL**
**20 rue du Loricard**
**F-77930 Fleury en Bière(FR)**

(72) Inventeur: **Malagutti, René**
**20 rue du Loricard**
**F-77930 Fleury en Bière(FR)**

(74) Mandataire: **Gutmann, Ernest et al**
**S.C. Ernest Gutmann - Yves Plasseraud 67,**
**boulevard Haussmann**
**F-75008 Paris(FR)**

(54) **Caisse pour le conditionnement de fruits ou de légumes.**

(57) L'invention concerne une nouvelle caisse pour le conditionnement de fruits ou de légumes, comportant une boîte, (1), munie d'un couvercle (4) possédant une poignée (5) et un système (6) permettant l'ouverture de la caisse, et caractérisée par le fait que la boîte (1) comporte deux ouvertures (2) recouvertes entièrement par une membrane transparente (3) percée de trous.

FIG.2

## CAISSE POUR LE CONDITIONNEMENT DE FRUITS OU DE LEGUMES

La présente invention concerne un nouveau conditionnement des fruits ou des légumes, qu'ils soient frais ou secs. L'invention s'applique notamment particulièrement bien au conditionnement des pommes de terre, de l'ail, des carottes.

L'invention ne se limite évidemment pas aux exemples ci-dessus. Elle peut être utilisée avec avantage pour toutes autres sortes de fruits ou de légumes.

Pour la commodité du langage, on désignera dans ce qui suit par produit, tous fruits ou légumes qu'ils soient à l'état frais ou sec, conditionnés selon l'invention.

Le conditionnement des fruits et des légumes pose plusieurs problèmes :
-Il doit être tout d'abord suffisamment solide pour permettre le transport des produits conditionnés sans que ceux-ci s'abîment, ce qui les rendraient impropres à la vente ou à la consommation.
-Il doit être également, surtout dans le cas de produits frais, suffisamment aéré pour que le produit conditionné puisse respirer. Sa conservation sera de cette façon plus longue, et l'état de fraîcheur du produit meilleur.

Il est connu depuis très longtemps d'utiliser des sacs de toile tissée ou, aujourd'hui, de plastique pour conditionner des légumes notamment des pommes de terre.

Ces sacs, ou filets, sont généralement perçes de trous quand ils sont en plastique, ou tissés de façon suffisamment lâche, quand ils sont en toile, pour que l'on obtienne un sac ou un filet non hermétiquement fermé, permettant ainsi au produit conditionné de respirer.

Ces sacs présentent cependant divers inconvénients.

La structure non rigide de ces sacs ou filets a pour conséquence que leur stockage, par exemple dans un magasin, occupe un volume important. Ces sacs peuvent en effet se déformer en fonction des produits qu'ils contiennent. Chacun des sacs possèdera alors une forme différente. Leur présentation et leur empilement nécessiteront de ce fait un espace important. Cet inconvénient se retrouve également pour le transport de ces sacs. Cette structure entraîne également que les produits ainsi emballés peuvent subir des dégradations résultant par exemple, de chocs répétés entre plusieurs sacs, ou de l'empilement de ces sacs, pouvant conduire à un écrasement des produits sous l'effet de leur poids.

Ces sacs non hermétiques entraînent d'autre part que divers déchets, en particulier de la terre quand les produits sont placés dans les sacs sans avoir été nettoyés au préalable, peuvent sortir du sac et salir l'utilisateur.

Un dernier inconvénient réside dans le fait que ces sacs n'offrent pas de support adéquat pour une étiquette ou analogue permettant de désigner de façon complète le produit conditionné. En particulier, dans le cas des sacs ou filets contenant des pommes de terre, le produit est généralement désigné par l'intermédiaire d'une étiquette attachée à l'une des extrémités du sac ou reliant entre elles les deux extrémités du sac. Il en résulte que ces étiquettes sont souvent arrachées lors de la manipulation des sacs, ou ne sont pas facilement lisibles.

La présente invention a pour but de remédier aux inconvénients énumérés ci-dessus en proposant un nouveau conditionnement des fruits ou des légumes.

Le conditionnement des fruits ou des légumes selon l'invention consiste en une caisse constituée d'un matériau rigide non déformable et hermétique à l'air, notamment en carton, comportant une ou plusieurs ouvertures pratiquées sur un ou plusieurs de ses côtés, et caractérisée en ce que lesdites ouvertures sont recouvertes entièrement par une membrane solide, translucide de préférence transparente, non hermétique à l'air.

La présence d'une ou de plusieurs ouvertures sur un ou plusieurs des côtés de la caisse permet à l'utilisateur de voir les produits conditionnés. Celui-ci pourra ainsi juger de leur qualité sans avoir à y toucher ou à ouvrir la caisse.

Il pourra encore vérifier de façon simple quelle quantité de produit il reste dans la caisse, après en avoir retiré une partie.

La forme, le nombre et la localisation de ces ouvertures pourront être choisis librement.

Selon une forme de réalistion préférée de l'invention, où l'on utilise une caisse de forme parallélépipédique rectangle, chacun des deux grande côtés du parallélépipéde rectangle comporte une ouverture de forme pentagonale, lesdites ouvertures étant disposées de façon à ne pas être symétriques entre elles par rapport à un plan parallèle aux dits grands côtés du parallèlépipède rectangle.

La surface de chaque ouverture devra être choisie de façon à ne pas rendre la caisse trop fragile. En effet, une ouverture trop importante aurait pour conséquence de réduire la solidité de la caisse, qui pourrait alors se déformer, voire se casser.

La surface maximale de ou des ouvertures réalisables pourra facilement être déterminée par l'Homme du Métier en fonction du matériau utilisé pour la fabrication de la caisse.

Par exemple, dans le cas où l'on utilise du carton, la surface de l'ouverture devra être inférieure à la moitié de la surface du grand coté du parallélépipède rectangle sur lequel est pratiquée ladite ouverture.

L'invention ne se limite pas à l'emploi de carton pour la fabrication de la caisse selon l'invention. Tout autre matériau pourra être utilisé, par exemple une matière plastique.

L'invention se caractérise également par le fait que la ou les ouvertures sont recouvertes entièrement par une membrane solide, translucide, de préférence transparente, capable de laisser circuler l'air entre l'extérieur et l'intérieur de la caisse.

L'utilisation d'une telle membrane permet aux produits conditionnés de respirer, ce qui ne serait pas possible s'ils étaient emballés dans une enceinte totalement hermétique.

La conservation des produits sera ainsi améliorée tant au niveau de sa durée qu'au niveau de l'état de fraîcheur des produits conditionnés.

Selon une forme de réalisation préférée de l'invention, la membrane est constituée d'une feuille de polypropylène percée de trous. Le diamètre de ces trous devra être suffisamment grand pour permettre aux produits conditonnés de respirer, sans toutefois rendre la membrane trop fragile ou permettre aux déchets et saletés éventuellement contenus dans la caisse, de passer à travers les trous de la membrane. Ceci s'avèrera particulièrement utile dans le cas où les produits sont placés dans les caisses directement après leur récolte ou leur ramassage et sans nettoyage préalable.

Avantageusement, les trous de la membrane ont un diamètre compris entre environ 0,5 et environ 2 mm et représentent une surface totale comprise entre environ 5 et environ 40 pur cent de la surface totate de l'ouverture.

La présente invention ne se limite pas à l'emploi d'une membrane de polypropylène. D'autres membranes peuvent être utilisées pour obtenir le même résultat. A titre d'exemples non limitatifs, on citera des membranes de cellulose ou encore des membranes constituées de mailles de plastique. Cette membrane pourra être fixée sur les ouvertures pratiquées sur la caisse par tout moyen, par exemple par collage ou agrafage.

La caisse pour le conditionnement de fruits ou de légumes selon l'invention fournit donc un moyen de transport et de stockage pratique et simple.

L'emploi d'un matériau rigide et non déformable pour la fabrication de la caisse protège en effet les produits conditionnées des chocs éventuels.

Cette rigidité de la caisse permet, d'autre part, un empilement ou un rangement des caisses dans un espace minimal.

La désignation des produits conditonnées, notamment leur provenance, leur calibre, leur qualitée, pourra apparaître clairement sur l'un des côtés de la caisse par collage d'une étiquette ou en imprimant directement cette désignation sur l'un des côtés de la caisse.

La fabrication des caisses pourra être réalisée de façon connue en soi, par exemple par pliage des différents côtés de la caisse, obtenus à partir d'une feuille sur laquelle les différents côtés sont représentés dans un même plan, puis collage ou agrafage de ces côtés.

De même, la taille de la caisse pourra être choisie librement. Elle sera déterminée par exemple en fonction de la quantité en poids du produit que l'on veut conditionner.

On pourra également prévoir une ou plusieurs poignées pour le transport de la caisse. Cette ou ces poignées pourront être réalisées en découpant une partie du couvercle ou d'un ou de plusieurs des côtés de la caisse de façon à permettre une prise en main convenable.

Cette ou ces poignées pourront être également prolongées par un prédécoupage de façon à permettre à l'utilisateur, en tirant simplement sur la ou les poignées dans le sens du prédécoupage, d'ouvrir la caisse pour retirer les produits conditionnés.

Le système de conditionnement selon l'invention permet de disposer les produits de différentes façons à l'intérieur de la caisse. On pourra par exemple, mettre le produit "en vrac" ou réaliser un cloisonnement interne de la caisse, par exemple en utilisant plusieurs sachets de cellophane contenant chacun des produits différents ou le même produit sous plusieurs états différents.

Des caractéristiques supplémentaires de l'invention apparaîtront à la lumière des exemples de réalisation de l'invention qui suivent ainsi que des figures qui s'y rattachent dans lesquelles :

-la figure 1 représente une vue en perspective d'une caisse de forme carrée selon l'invention ;

la figure 2 représente une vue en perspective d'une caisse d'une forme parallélépipédique rectangle selon l'invention.

Ainsi qu'il a déjà été dit et comme il résulte déjà de ce qui précède, l'invention ne se limite pas aux exemples de réalisation donnés ci-dessous, mais en embrasse au contraire toutes les variantes.

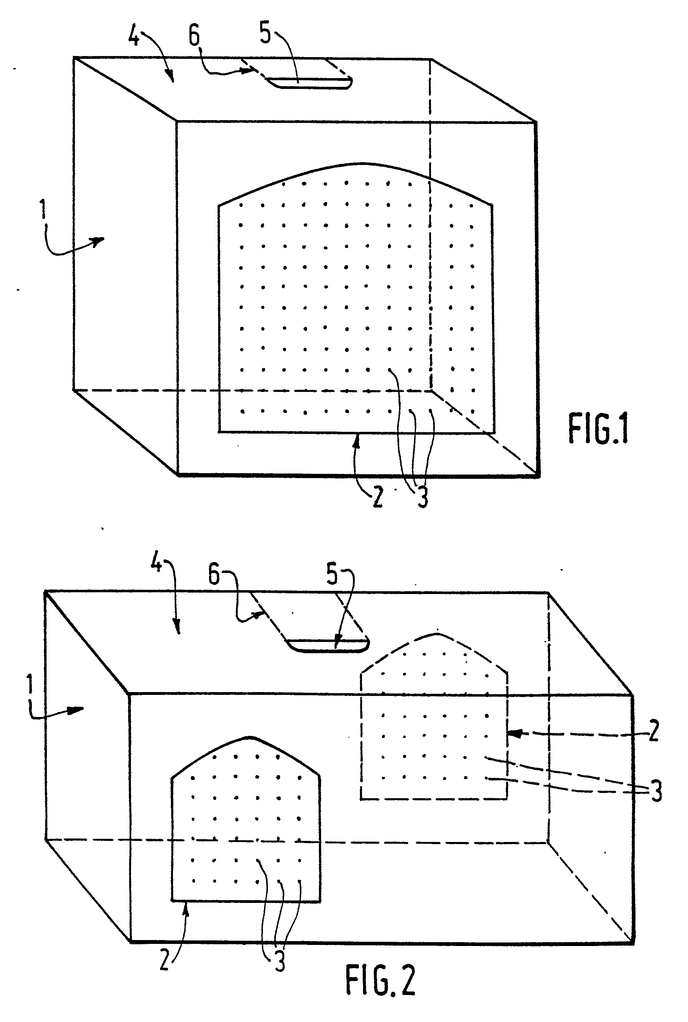

La figure 1 montre une forme de réalisation de l'invention, dans une forme carrée. La caisse de conditionnement selon l'invention comporte une boîte (1), comportant sur l'un de ses côtés une ouverture (2), de forme pentagonale. Cette ouverture (2) est recouverte entièrement par une membrane (3) percée de trous. Le couvercle (4) est muni d'une poignée (5). Cette poignée est prolongée par un prédécoupage (6) du couvercle, permettant à l'utilisateur d'ouvrir la caisse en tirant sur la poignée dans le sens de ce prédécoupage.

La figure 2 montre une forme de réalisation de la caisse selon l'invention dans une forme parallélépipédique rectangle. La caisse (1) comporte deux ouvertures (2), chacune de ces ouvertures étant située sur l'un des grands côtés du parallélépipède rectangle. Ces deux ouvertures (2) sont recouvertes entièrement par une membrane - (3) percée de trous. La caisse (1) comporte un couvercle (4) muni d'une poignée (5) ladite poignée étant prolongée par un prédécoupage (6) permettant à l'utilisateur d'ouvrir facilement la caisse.

**Revendications**

1/ -Caisse pour le conditionnement de fruits ou de légumes, constituée en un matériau rigide, non déformable et hermétique à l'air, notamment en carton, comportant une ou plusieurs ouvertures pratiquées sur un ou plusieurs de ses côtés caractérisée en ce que lesdites ouvertures sont recouvertes entièrement par une membrane solide, translucide, de préférence transparente, non hermétique à l'air.

2/ -Caisse pour le conditionnement selon la revendication 1, caractérisée en ce que la membrane est en polypropylène.

3/ -Caisse pour le conditionnement selon les revendications 1 ou 2, caractérisée en ce que la membrane est percée de trous, d'un diamètre compris entre environ 0,5 mm et environ 2 mm.

4/ -Caisse pour le conditionnement selon l'une quelconque des revendications 1 à 3, caractérisée en ce que les trous représentent une surface totale comprise entre environ 5 et environ 40 pour cent de la surface totale de l'ouverture.

5/ -Caisse selon l'une quelconque des revendications 1 à 4, caractérisée en ce qu'elle est de forme parallèlépipédique rectangle, chacun des deux grands côtés dudit parallèlépipède rectangle comportant une ouverture de forme pentagonale, lesdites ouvertures étant disposées de façon à ne pas être symétriques entre elles par rapport à un plan parallèle auxdits grands côtés du parallèlépipède rectangle.

6/ -Caisse selon la revendication 5, caractérisée en ce que chaque ouverture occupe une surface inférieure à environ la moitié de la surface du grand côté dans lequel elle est située.

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 561 212 (AUBONNET)<br>* Page 5, lignes 19-24; page 6, lignes 14-28; figures 2,3 * | 1 | B 65 D 85/34<br>B 65 D 5/42 |
| | --- | | |
| Y | US-A-3 016 131 (KENNEDY)<br>* Colonne 2, lignes 22-48; figures 1-3 * | 1 | |
| A | | 3 | |
| | --- | | |
| A | US-A-2 153 333 (LOWEY)<br>* Page 1, colonne de droite, lignes 7-14; figures 1-3 * | 1 | |
| | --- | | |
| A | EP-A-0 159 645 (AGFA-GEVAERT)<br>* Page 3, lignes 11-29; figures 1,5 * | 2 | DOMAINES TECHNIQUES RECHERCHES (Int. Cl.4) |
| | --- | | |
| A | US-A-1 791 094 (ALBERT)<br>* Figures 1,3 * | 5 | B 65 D |
| | --- | | |
| A | US-A-4 441 614 (GULLIVER)<br>* Colonne 5, lignes 36-39; colonne 6, lignes 6-11; figures 1,6,7 * | 1 | |
| | ----- | | |

Le présent rapport de recherche a été établi pour toutes les revendications

| Lieu de la recherche | Date d'achèvement de la recherche | Examinateur |
|---|---|---|
| LA HAYE | 24-03-1987 | BERRINGTON N.M. |